(19) **Europäisches Patentamt**

**European Patent Office**

**Office européen des brevets**

(11) **EP 0 813 036 B1**

(12) **EUROPEAN PATENT SPECIFICATION**

(45) Date of publication and mention
of the grant of the patent:
**19.01.2005 Bulletin 2005/03**

(51) Int Cl.⁷: **F28D 1/03**, F28F 3/02

(21) Application number: **97303694.0**

(22) Date of filing: **02.06.1997**

(54) **Panel radiators**

Platten-Heizkörper

Radiateur panneau

(84) Designated Contracting States:
**AT BE CH DE DK ES FI FR GB GR IE IT LI LU NL
SE**

(30) Priority: **14.06.1996 GB 9612436**

(43) Date of publication of application:
**17.12.1997 Bulletin 1997/51**

(73) Proprietor: **Caradon Heating Europe B.V.
1077 ZX Amsterdam (NL)**

(72) Inventor: **Wojick, Guy
1930 Zaventem (BE)**

(74) Representative: **Hill, Richard
Wilson, Gunn, M'Caw,
5th Floor
Blackfriars House
The Parsonage
Manchester M3 2JA (GB)**

(56) References cited:
DE-A- 2 526 038          DE-U- 9 101 494
FR-A- 690 084            FR-A- 1 094 804
FR-A- 1 189 300          FR-A- 1 445 964
FR-A- 2 170 836          FR-A- 2 175 796
FR-A- 2 356 898          GB-A- 2 165 037

## Description

This invention relates to a panel radiator for a central heating system comprising the features of the preamble of claim 1. Such a panel radiator is known, for example, from GB-A-2 165 037, respectively FR-A-690 084. Such a panel radiator is formed from two rectangular pressed metal sheets which are placed together and welded around their periphery and at intermediate points where the sheets contact each other, so that the pressed and welded sheets confine internal flow ways for circulation of water through the radiator. The flow ways include upper and lower headers extending along the top and bottom edges of the radiator, and a series of parallel upwardly extending channels spaced apart along the radiator, each channel communicating with the upper and lower headers at its ends. Radiators can have a single panel of this form, or two panels interconnected by connection manifolds at their corners so that the panels are disposed in spaced parallel relationship one behind the other. It is also known to equip radiator panels with fins to improve their thermal efficiency by increasing the surface area with which convection air can come into contact to be warmed. Generally speaking the fins are attached to the rear surface of a single panel radiator, and in a double panel radiator the fins are usually attached to the rear of the front panel and/or the front face of the rear panel. Conveniently the fins are provided by a corrugated metal sheet having ridge portions which are fastened to the radiator panel at the locations of the upwardly extending water channels, and valley portions which project away from the panel and define, with the grooved surface portions of the panel located between the channels, chimneys or risers through which air can flow to be heated. Of course air can also flow over the surface of the fins through the space or plenum at the side of the fin sheet remote from the panel to which the fin sheet is attached.

The present invention has for its aim to improve the heat transfer efficiency of panel radiators of the form described above.

With a view to optimising or maximising the surface area for contact with air, the fin sheet is in the prior art constructions of such a height that the air ducts or risers extend substantially to the headers at the top and bottom of the radiator panel such that the area of the air duct openings is equal to the area confined by the fin sheet valley (typically for a 600mm radiator, the fin sheet height is 525mm). Because the panel surface is not depressed at the headers, there are formed constrictions at the ends of the risers where the air flow is restricted due to a reduced through flow area. Although the total fin surface area may be reduced due to the height of the fin sheet being made shorter, it has been found that the overall efficiency of a panel radiator can be improved by avoiding constrictions at the ends of the riser passages.

Accordingly, provided in accordance with the invention there is a panel radiator for a central heating system, comprising a panel surface having raised header and channel portions, and grooves intermediate the channel portions and extending lengthwise between the header portions, and a corrugated fin sheet having ridges fastened to the channel portions and valleys extending away from and aligned with the grooves to form open-ended ducts for passage of air, characterised in that the fin sheet has such a height, in the direction in which the ridges and valleys extend, and is so arranged that the ducts do not extend to the header portions, the bottoms of the valleys at the ends of the air ducts are at a distance from the adjacent header portions, and said distance is not greater than the distance (R) from the bottoms of the valleys at the ends of the air ducts to the bottoms of the grooves, so that the through flow areas at the ends of the ducts are substantially un-constricted by the header portions.

Most conveniently and to achieve greatest efficiency, the edges of the fin sheet at the upper and lower ends of the air ducts lie in planes substantially normal to the radiator panel, and the bottoms of the valleys at the ends of the ducts are located intermediate, and preferably approximately midway between the adjacent header portion and a point lying at the centre of an arc to which the bottom of the groove is tangential and a surface portion joining the header portion to the groove bottom is also tangential. Preferably the bottoms of the valleys at the ends of the ducts lie substantially midway between said point at the centre of the arc and a further pointed aligned with the nearest edge of the header portion in a direction perpendicular to the plane of the panel.

According to the invention the overall height of the fin sheet is reduced without any loss of heat output efficiency, and also the area of the fin sheet which contacts and needs to be fastened in good thermal contact with the panel is reduced so that manufacturing costs are also reduced.

In a panel radiator of the known form described above, convection air flowing through the risers defined by the panel and fin sheet is heated more effectively than air which passes over the external surface of the fin sheet remote from the panel. It has been found that an increase in overall efficiency is obtained by relating the heated air contact areas to the air flow cross-sections in both regions of air flow.

According to a preferred embodiment of the invention plenums for air flow are partially confined by the surface of the fin sheet remote from the panel surface, and the fin sheet is so shaped and dimensioned that, as seen in cross section, the ratio of the air flow area of the ducts to the length of the duct circumference is substantially equal to the ratio of the air flow area of the plenums divided by the length of the plenum circumference formed by the fin sheet.

The plenum around a fin sheet valley may be considered to be confined by planes perpendicular to the panel surface and midway between the valley and its adjacent valleys, by a plane parallel to the panel face, and by the surface of the fin sheet. In the case of a double panel radiator in which only one panel is equipped with a fin sheet, the plenums will be confined by the face of the second panel, whereas if both panels have fin sheets, the plane confining the plenum spaces and parallel to the panel face will be the plane spaced equidistant from the confronting fin sheets.

In the case of a single panel radiator, the plenums around the fin sheet valleys may be considered to be confined by a plane parallel to the panel face located at the approximate position at which the surface of a wall on which the panel radiator is mounted in use is located, typically around 75mm from the front face of the panel. With a single panel radiator the efficiency will be optimised when the ratio of the flow area to heated circumferential length is greater for the plenums than it is for the air ducts.

According to a preferred aspect of the invention, a panel radiator with air ducts defined by a fin sheet as described above has the ducts so shaped in cross section that the ratio of the duct area in mm$^2$ to the length of the duct circumference in mm is in the range of 6 to 7 mm, in particular about 6.4 mm.

A more complete understanding of the invention in its various aspects will be gained from the more detailed description which follows, reference being made to the accompanying drawings in which:-

Figure 1 is a partial vertical section through a panel radiator according to the invention;
Figure 2 is a partial horizontal section through a single panel radiator embodying the invention; and
Figure 3 is a partial horizontal section through a double panel radiator embodying the invention.

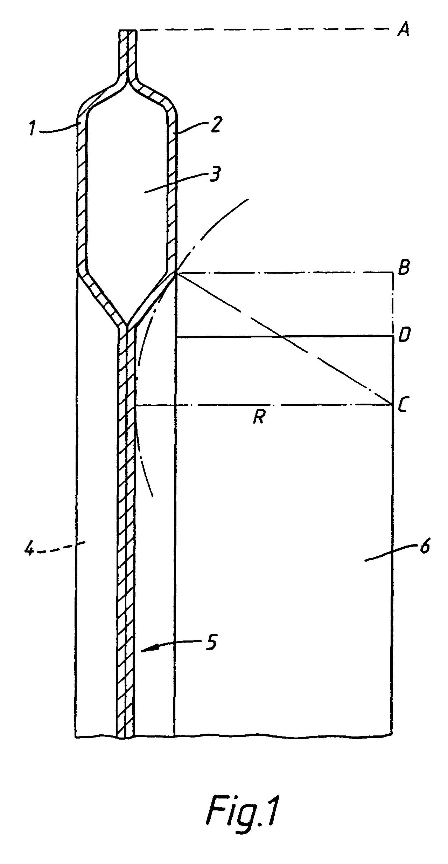

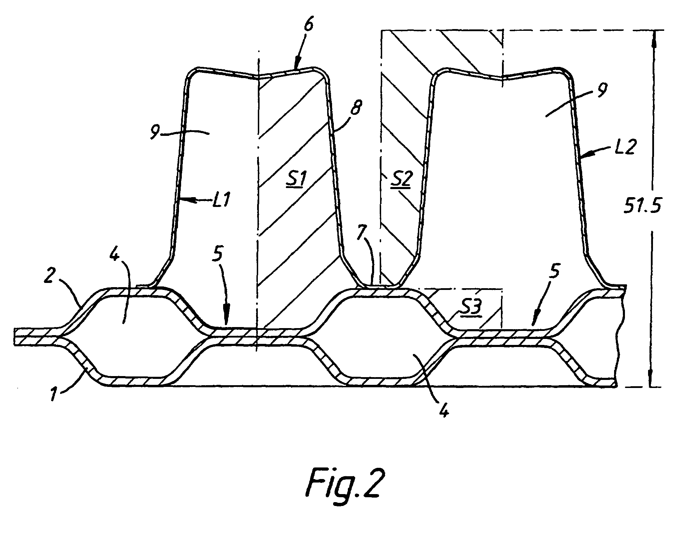

The panel radiator illustrated in Figs 1 and 2 has a panel formed from pressed metal sheets 1,2 which are shaped and welded together to form headers 3 along the upper and lower edges of the panel, and a series of parallel vertical channels 4 which communicate with the headers at their opposite ends. Between the channels 4, the panel sheets 1,2 have external grooves 5. Fastened to the rear of the panel is a corrugated fin sheet 6 shaped by bending a comparatively thin metal sheet to form ridges 7 which are attached to the panel along the channel surface portions, and valleys 8 which extend away from the panel and confine therewith open ended risers or air ducts 9. As so far described the panel radiator is of known construction. an the known panel radiators, the fin sheet has such a height that the ducts extend essentially to the level of the headers at the top and bottom of the radiator, e.g. to the point B shown on Figure 1. As a result, there are formed restrictions due to the through flow area of the ducts being constricted at the ends due to the headers. According to the present invention the height of the fin sheet is reduced to avoid such constrictions. The through flow area at the ends of the ducts can be maximised, by arranging the top edge of the fin sheet at the bottoms of the valleys at point C which is equally spaced from the bottom of the groove 5 and from the adjacent header surface, and is at the centre of an arc to which the bottom of the groove 5 is tangential and to which the transition wall between the bottom of the groove and the header 2 is also tangential. However, with the top edge of the fin sheet lying in a horizontal plane perpendicular to the plane of the panel, maximum thermal efficiency is obtained with the top edge at the valley bottoms located at a point D midway between points B and C. It will be appreciated that this arrangement is replicated at the bottom edge of the fin sheet. For a panel radiator having a height of 600 mm, with the distance AB of the point B from the level of the adjacent top (or bottom) edge equal to 56 mm and the maximum valley depth R being 48 mm, the point D is ideally located at 46 mm below the level of the top (or bottom) edge so that the fin sheet has a height of 508mm. By the arrangement of the invention the best compromise between the air flow velocity through the air ducts and the heat exchange area of the fin sheet is realised.

The fin sheet is shaped and dimensioned to obtain maximum thermal efficiency. From tests on a double panel radiator it has been found this is achieved by relating the air flow areas to the circumference of these areas defined by heated surfaces of the radiator. From Figure 2 it can be seen that the through flow area of the air risers or ducts 9 is twice the shaded area S1, and the circumference of the duct is twice the length L1 shown in dark line. It has been found appropriate to arrange for the dimension S1/L1 to have a value of around 6.43 mm. The plenum around a valley of the fin sheet which is available for convection air to pass in heat exchange relationship with the fin sheet has a through flow area twice the shaded area S2, whereas the circumference of this plenum which is defined by the heated fin sheet is twice the length L2 shown in dark line. The ratio S2/L2 is substantially equal to the ratio S1/L1 and in the illustrated embodiment is about 6.35mm.

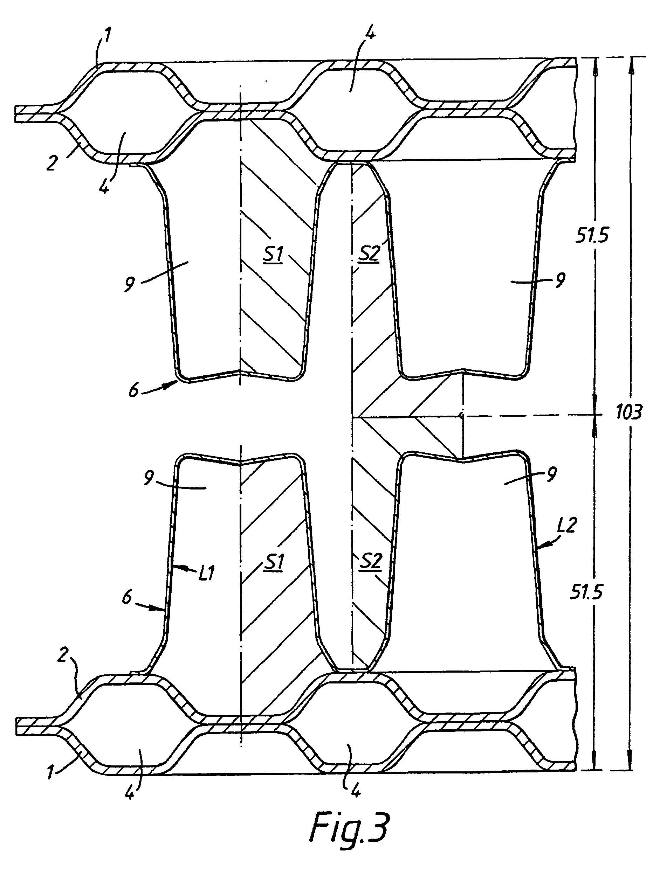

Figure 3 shows both panels of a double panel radiator in which each of the panels is formed essentially as described above, the panels being connected together so that the fin sheets confront each other. The valleys of the respective fin sheets have the same depth, and it is appropriate to consider the plenums associated with the respective fin sheet valleys to be confined by a plane located midway between the fin sheets, and hence midway between the opposite faces of the radiator. In this case the same relationship between the ratios of the areas to the circumference of the heated walls confining those areas applies, so that:

$$\frac{S1}{L1} = \frac{S2}{L2}$$

From the above description it will be appreciated that the invention enables enhanced efficiency while reducing manufacturing costs due to fin sizes being diminished.

For single panel radiators the above equation for optional efficiency needs to be modified and may be written as

$$K\frac{S_1}{L^1} = \frac{S_2}{L_2}$$

where K has a value not greater than 1, for example between 0.6 and 1.0.

## Claims

1. A panel radiator for a central heating system, comprising a panel surface having raised header and channel portions (3,4), and grooves (5) intermediate the channel portions (4) and extending lengthwise between the header portions (3), and a corrugated fin sheet (6) having ridges (7) fastened to the channel portions (4) and valleys (8) extending away from and aligned with the grooves (5) to form openended ducts (9) for passage of air, **characterised in that** the fin sheet (6) has such a height, in the direction in which the ridges and valleys extend, and is so arranged that the ducts (9) do not extend to the header portions (3), the bottoms of the valleys (8) at the ends of the air ducts (9) are at a distance (R) from the adjacent header portions (3), and said distance is not greater than the distance (R) from the bottoms of the valleys (8) at the ends of the air ducts to the bottoms of the grooves (5), so that the through flow areas at the ends of the ducts (9) are substantially un-constricted by the header portions (3).

2. A panel radiator according to claim 1, wherein the edges of the fin sheet (6) at the upper and lower ends of the ducts (9) lie in planes substantially normal to the plane of the radiator panel, and the bottoms of the valleys (8) at the ends of the ducts (9) are located intermediate the adjacent header portion (3) and a point (C) lying at the centre of an arc to which the bottom of the groove (5) is tangential and a surface portion joining the header portion (3) to the bottom of the groove (5) is also tangential.

3. A panel radiator according to claim 2, wherein the bottoms of the valleys (8) at the ends of the ducts (9) terminate at points (D) substantially midway between said point (C) and a further point (B) aligned with the nearest edge of the adjacent header portion (B) in a direction perpendicular to the plane of the panel.

4. A panel radiator according to any one of claims I to 3, wherein plenums for air flow are confined partially by the surface of the fin sheet (6) remote from the said panel surface and said ducts (9), and the corrugations of the fin sheet are so shaped and dimensioned that, as seen in cross section, the ratio of the air flow area (2 x S1) of a duct (9) to the length of the duct circumference (2 x L1) is substantially equal to the ratio of the air flow area (2 x S2) of a plenum divided by the length ( 2 x L2) of the plenum circumference formed by the fin sheet.

5. A panel radiator according to claim 4, wherein the radiator is a double panel radiator with each panel having a fin sheet (6) attached thereto, the fin sheets having their valleys (8) directed towards each other whereby the plenums are delimited by planes perpendicular to the planes of the panels and midway between adjacent valleys and by a plane parallel to the planes of the panels and equidistant from the confronting valleys of the fin sheets.

6. A panel radiator according to any one of claims 1 to 3, wherein for a central heating system, comprising a panel surface, further plenums for air flow are partially further confined by the surface of the fin sheet remote from the panel surface and adapted to be confined in use of the panel radiator by an unheated wall spaced from the fin sheet at a predetermined distance, the corrugations of the fin sheet are so shaped and dimensioned that seen in cross section the ducts and plenums satisfy the equation:

$$K\frac{S1}{L1} = \frac{S2}{L2}$$

where S1/L1 is the ratio of the air flow area of a duct to the length of the duct circumference, S2/L2 is the ratio of the air flow area of a plenum to the length of the plenum circumference formed by the fin sheet, and K is a constant with a value not greater than 1, preferably between 0.6 and 1.0.

7. A panel radiator according to any of the preceding claims, wherein the ducts (9) are so shaped in cross section that the ratio of the duct area (2 x S1) in $mm^2$ to the length (2 x L1) of the duct circumference in mm is in the range of 6 to 7mm.

8. A panel radiator according to claim 7 wherein said ratio is substantially equal to 6.4mm.

## Patentansprüche

1. Platten-Heizkörper für ein Zentralheizungssystem, aufweisend eine Plattenoberfläche mit erhöhten Sammelrohr- und Kanalabschnitten (3,4) und Rinnen (5) zwischen den Kanalabschnitten (4), die in Längsrichtung zwischen den Sammelrohrabschnitten (3) verlaufen, sowie ein gewelltes Rippenblech (6) mit Rippen (7), die an den Kanalabschnitten (4) befestigt sind, und Täler (8), die von den Rinnen (5) weg und an ihnen ausgerichtet verlaufen, so dass sie offene Kanäle (9) für den Durchtritt von Luft bilden, **dadurch gekennzeichnet, dass** das Rippenblech (6) in der Richtung, in der die Rippen und Täler verlaufen, eine solche Höhe hat und so angeordnet ist, dass die Kanäle (9) nicht bis zu den Sammelrohrabschnitten (3) reichen, die unteren Teile der Täler (8) sich an den Enden der Luftkanäle (9) in einem Abstand (R) von den benachbarten Sammelrohrabschnitten (3) befinden und dieser Abstand nicht größer ist als der Abstand (R) von den unteren Teilen der Täler (8) an den Enden der Luftkanäle zu den unteren Teilen der Rinnen (5), so dass die Durchströmflächen an den Enden der Kanäle (9) im Wesentlichen nicht von den Sammelrohrabschnitten (3) verengt werden.

2. Platten-Heizkörper nach Anspruch 1, bei dem die Kanten des Rippenblechs (6) an den oberen und unteren Enden der Kanäle (9) in Ebenen liegen, die im Wesentlichen senkrecht zur Ebene des Platten-Heizkörpers stehen, und die unteren Teile der Täler (8) an den Enden der Kanäle (9) sich zwischen dem angrenzenden Sammelrohrabschnitt (3) und einem Punkt (C) befinden, der im Mittelpunkt eines Bogens liegt, zu dem der untere Teil der Rinne (5) eine Tangente bildet und zu dem ein Oberflächenabschnitt, der den Sammelrohrabschnitt (3) mit dem unteren Teil der Rinne (5) verbindet, ebenfalls eine Tangente bildet.

3. Platten-Heizkörper nach Anspruch 2, bei dem die unteren Teile der Täler (8) an den Enden der Kanäle (9) in Punkten (D) ihren Abschluss finden, die im Wesentlichen auf halbem Weg zwischen dem genannten Punkt (C) und einem weiteren Punkt (B) liegen, der an der am nächsten gelegenen Kante des angrenzenden Sammelrohrabschnitts (B) in einer Richtung ausgerichtet ist, die senkrecht zur Ebene der Platte steht.

4. Platten-Heizkörper nach einem der Ansprüche 1 bis 3, bei dem Sammelkammern für die Luftströmung teilweise durch die Oberfläche des Rippenblechs (6) begrenzt sind, das von der genannten Plattenoberfläche und den Kanälen (9) entfernt ist, und bei dem die Riffelungen des Rippenblechs so geformt und dimensioniert sind, dass bei einer Betrachtung im Querschnitt das Verhältnis der Luftströmungsfläche (2 x S1) eines Kanals (9) zur Länge des Kanalumfangs (2 x L1) im Wesentlichen gleich dem Verhältnis der Luftströmungsfläche (2 x S2) einer Sammelkammer geteilt durch die Länge (2 x L2) des Sammelkammerumfangs ist, der durch das Rippenblech gebildet wird.

5. Platten-Heizkörper nach Anspruch 4, bei dem der Heizkörper ein Doppelplatten-Heizkörper ist, bei dem jede Platte ein daran befestigtes Rippenblech (6) besitzt und die Täler (8) der Rippenbleche zueinander zeigen, wobei die Sammelkammern durch Ebenen senkrecht zu den Ebenen der Bleche und in der Mitte zwischen angrenzenden Tälern begrenzt sind, sowie durch eine Ebene parallel zu den Ebenen der Platten und in gleichem Abstand von den einander gegenüberstehenden Tälern der Rippenbleche.

6. Platten-Heizkörper nach einem der Ansprüche 1 bis 3, bei dem für ein Zentralheizungssystem, aufweisend eine Plattenoberfläche, weitere Sammelkammern für die Luftströmung teilweise weiter durch die Oberfläche des Rippenblechs begrenzt sind, das von der Plattenoberfläche entfernt ist, und dafür angepasst, im Gebrauch des Platten-Heizkörpers durch eine unbeheizte Wand begrenzt zu werden, die von dem Rippenblech in einem zuvor festgelegten Abstand entfernt liegt, wobei die Riffelungen des Rippenblechs so geformt und dimensioniert sind, dass bei einer Betrachtung im Querschnitt die Kanäle und Sammelkammern die Gleichung:

$$K \frac{S1}{L1} = \frac{S2}{L2}$$

erfüllen, wobei S1/L1 dem Verhältnis der Luftströmungsfläche eines Kanals zur Länge des Kanalumfangs entspricht, S2/L2 dem Verhältnis der Luftströmungsfläche einer Sammelkammer zur Länge des Sammelkammerumfangs, der von dem Rippenblech gebildet wird, und K einer Konstante mit einem Wert nicht größer als 1, vorzugsweise zwischen 0,6 und 1,0.

7. Platten-Heizkörper nach einem der vorhergehenden Ansprüche, bei dem die Kanäle (9) im Querschnitt so geformt sind, dass das Verhältnis der Kanalfläche (2 x S1) in mm$^2$ zur Länge (2 x L1) des Kanalumfangs in mm in der Größenordnung von 6 bis 7 mm liegt.

8. Platten-Heizkörper nach Anspruch 7, bei dem dieses Verhältnis im Wesentlichen gleich 6,4 mm ist.

**Revendications**

1. Panneau radiateur pour un système de chauffage central, comprenant une surface de panneau ayant des parties de collecteur et de canal (3, 4) et des rainures (5) entre les parties de canal (4) et s'étendant dans le sens de la longueur entre les parties de collecteur (3), et une tôle d'ailette ondulée (6) ayant des stries (7) attachées aux parties de canal (4) et des vallées (8) s'étendant à partir des rainures (5) et alignées avec celles-ci pour former des conduites à extrémités ouvertes (9) pour le passage de l'air, **caractérisé en ce que** la tôle d'ailette (6) a une hauteur telle, dans la direction dans laquelle les stries et les vallées s'étendent, et est disposée de manière à ce que les conduites (9) ne s'étendent pas jusqu'aux parties de collecteur (3), les fonds des vallées (8) au niveau des extrémités des conduites d'air (9) sont à une certaine distance (R) des parties de collecteur adjacentes (3), et ladite distance n'est pas supérieure à la distance (R) depuis les fonds des vallées (8) aux extrémités des conduites d'air jusqu'aux fonds des rainures (5), de sorte que les zones d'écoulement transversales au niveau des extrémités des conduites (9) ne sont sensiblement pas comprimées par les parties de collecteur (3).

2. Panneau selon la revendication 1, dans lequel les bords de la tôle d'ailette (6) au niveau des extrémités supérieure et inférieure des conduites (9) sont dans des plans sensiblement perpendiculaires au plan du panneau radiateur, et les fonds des vallées (8) au niveau des extrémités des conduites (9) sont situés de manière intermédiaire entre la partie de collecteur adjacente (3) et un point (C) situé au centre d'un arc auquel le fond de la rainure (5) est tangentiel et une partie de surface reliant la partie de collecteur (3) au fond de la rainure (5) est également tangentielle.

3. Panneau radiateur selon la revendication 2, dans lequel les fonds des vallées (8) au niveau des extrémités des conduites (9) se terminent en des points (D) sensiblement à mi-chemin entre ledit point (C) et un autre point (B) aligné avec le bord le plus proche de la partie de collecteur adjacente (B) dans une direction perpendiculaire au plan du panneau.

4. Panneau radiateur selon l'une quelconque des revendications 1 à 3, dans lequel des capots d'air pour l'écoulement de l'air sont confinés partiellement par la surface de la tôle d'ailette (6) éloignée de ladite surface de panneau et lesdites conduites (9), et les ondulations de la tôle d'ailette sont formées et dimensionnées de telle sorte que, vu en section en coupe, le rapport de la zone d'écoulement d'air (2 x S1) d'une conduite (9) à la longueur de la circonférence de conduite (2 x L1) est sensiblement égal au rapport de la zone d'écoulement d'air (2 x S2) d'un capot d'air divisé par la longueur (2 x L2) de la circonférence du capot d'air formé par la tôle d'ailette.

5. Panneau radiateur selon la revendication 4, dans lequel un radiateur est un radiateur à panneau double, chaque panneau ayant une tôle d'ailette (6) attachée à celui-ci, les tôles d'ailette ayant leurs vallées (8) dirigées les unes vers les autres moyennant quoi les capots d'air sont délimités par les plans perpendiculaires aux plans des panneaux et à mi-chemin entre les vallées adjacentes et par un plan parallèle aux plans des panneaux et équidistant des vallées se faisant face des tôles d'ailette.

6. Panneau radiateur selon l'une quelconque des revendications 1 à 3, dans lequel pour un système de chauffage central, comprenant une surface de panneau, d'autres capots d'air pour l'écoulement de l'air sont partiellement encore confinés par la surface de la tôle d'ailette éloignée de la surface de panneau et adaptée pour être confinée lors de l'utilisation du panneau radiateur par une paroi non chauffée espacée de la tôle d'ailette d'une distance prédéterminée, les ondulations de la tôle d'ailette sont formées et dimensionnées de telle sorte que, vus en section en coupe, les conduites et les capots d'air répondent à l'équation :

$$K\frac{S_1}{L^1} = \frac{S_2}{L_2}$$

dans laquelle S1 / L1 est le rapport de la zone d'écoulement d'air d'une conduite à la longueur de la circonférence de la conduite, S2 / L2 est le rapport de la zone d'écoulement d'air d'un capot d'air à la longueur de la circonférence du capot d'air formé par la tôle d'ailette, et K est une constante avec une valeur qui n'est pas supérieure à 1, de préférence entre 0,6 et 1,0.

7. Panneau radiateur selon l'une quelconque des revendications précédentes, dans lequel les conduites (9) sont formées de telle sorte que, en section en coupe, le rapport de la zone de conduite (2 x S1) en mm$^2$ à la longueur (2 x L1) de la circonférence de la conduite en mm est dans la plage de 6 à 7 mm.

8. Panneau radiateur selon la revendication 7, dans lequel ledit rapport est sensiblement égal à 6,4 mm.

*Fig.1*

Fig.2

Fig.3